# EUROPEAN PATENT SPECIFICATION

(11) **EP 2 352 974 B1**
(45) Date of publication and mention of the grant of the patent: **27.07.2016**
(21) Application number: 09830905.7
(22) Date of filing: 25.11.2009
(51) Int. Cl.: G01G 19/08, B60N 2/00, B60N 2/56, B60R 21/015, B60H 1/00

(54) **COMBINATION SEAT HEATER AND OCCUPANT SENSOR ANTENNA**
KOMBINATIONSSITZHEIZUNG UND INSASSENSENSORANTENNE
COMBINAISON DE CHAUFFAGE DE SIÈGE ET ANTENNE DE DÉTECTION DE PRÉSENCE D'OCCUPANT

(30) Priority: 03.12.2008 US 119511 P; 20.07.2009 US 226879 P
(43) Date of publication of application: 10.08.2011
(73) Proprietor: Illinois Tool Works Inc., Glenview, IL 60025 (US)
(72) Inventor: CUBON, Michael, M., Glenview Illinois 60026 (US); BULGAJEWSKI, Edward, F., Glenview Illinois 60026 (US)
(74) Representative: Trinks, Ole
(86) International application number: PCT/US2009/065871
(87) International publication number: WO 2010/065411

(56) References cited:
- US-A1- 2001 045 733
- US-A1- 2004 021 346
- US-A1- 2004 113 634
- US-A1- 2007 215 601
- US-A1- 2008 011 732
- US-A1- 2008 073 130
- US-B1- 7 134 715

## Description

### FIELD OF THE INVENTION

The present invention relates to seat heaters and to occupant sensor systems for automobiles and, more particularly to structures having combined components for a seat heater and an occupant sensor.

### BACKGROUND OF THE INVENTION

Various types of seat heaters have been used in automobiles to heat occupied seats and improve passenger comfort. A vehicle seat heater is required to be strong and durable to accommodate bending without stretching to maintain integrity of the conductor traces comprising the heater. It is known to provide a self-regulating heater on a flexible substrate that can withstand flexing and temperature variations and resist moisture. Exemplary automobile seat heaters can be found, for example, in United States Patents 6,884,965 and 7,202,444. The seat heaters disclosed therein can be made by polymer thick film printing processes, which are known to those skilled in the art.

Occupant sensors have been incorporated into automobile passenger compartments for determining when a seat is occupied and alerting passengers if seatbelts are not fastened for all occupants. In more sophisticated occupant sensor systems, vehicle air bags can be activated or deactivated based on sensed occupancy. Deployment characteristics of an airbag system may be controlled and changed based on the sensed mass of the occupant, to operate differently for children or smaller adults than for larger occupants. Different types of sensor systems have been used. Some occupant sensor systems discriminate only on differences in mass and do not distinguish between, for example, a small child and an object of similar mass placed on the seat. A more sophisticated occupant sensor technology, referred to herein as a capacitor system, utilizes electric field imaging technology to determine occupancy and distinguish between human occupants and other articles or things that may be placed on a vehicle seat. A flexible antenna is placed in the automobile seat and operates as one plate spaced from a second plate defined by the roof of the vehicle, the windshield or other structure to establish charge separation in a parallel plate capacitor creating an internal electric field. A polarized dielectric interposed between the spaced plates reduces the electric field and increases the capacitance. By sensing capacitance changes that occur when a person or thing is positioned between the plates, and comparing to the known capacitance of air between the antenna and plate, software can discriminate between persons and things, and can evaluate the size of a person occupying the seat. A controller can then use the information obtained from the sensor to provide operating signals for controlling various systems that interact with the occupants.

It is known to provide seat heaters and occupant sensors as separate individual systems. Installation of the separate individual components of each system can be both difficult and time consuming. It is also known to provide intra-seat structures that combine components for seat heater and occupant sensing systems of some types, such as that shown in United States Patent 7,500,536 which utilizes a self-regulating heater and a mass sensor. However, it has not been known to combine the more sophisticated capacitor system occupant sensors with seat heaters due to interference generated in the performance of capacitor system sensor by operation of the seat heater. Even providing these systems as separate individual components in a seat has been difficult, due to the interference problem.

It would be advantageous to combine in a single seat structure both a self-regulating heater component and an antenna for an occupant sensor capacitor system.

### SUMMARY OF THE INVENTION

The present invention provides a combined structure having a self-regulating heater and an antenna for an occupant sensor capacitor system on opposite sides of a common substrate as defined in the claims.

In one aspect of one form thereof, the present invention provides a combination seat heater and occupant sensor antenna with an electrically insulative substrate having opposed first and second sides, a seat heater assembly applied to the first side of the substrate, a capacitor system occupant sensor antenna applied to the second side of the substrate, and interference reducing structure interposed between the seat heater assembly and the antenna.

In another aspect of another form thereof, the present invention provides a combination seat heater and occupant sensor antenna with an electrically insulative substrate having opposed first and second sides, a polymer thick film printed seat heater conductive layer on one of the first and second sides of the substrate, the seat heater conductive layer defining a plurality of conductive traces; and a polymer thick film printed seat heater resistive layer on the seat heater conductive layer. At least one of a printed ground plane layer and a printed isolation layer is applied to the other of the first and second sides of the substrate; and a polymer thick film printed capacitor system occupant sensor antenna is applied to the printed ground plane layer and or the printed isolation layer.

In a further aspect of a further form thereof, the present invention provides a method for making a combination seat heater and occupant sensor antenna, the method comprising steps of providing an electrically insulative substrate having opposed first and second sides; printing a seat heater assembly on one of the first and second sides of the substrate; and printing a capacitor system occupant sensor antenna assembly on the other of the first and second sides of the substrate

An advantage obtained from one embodiment of the present invention, in one form thereof, is supplying a single unit or structure incorporating components for both an automobile seat heater and a capacitor system vehicle occupant sensor, thus saving material costs and promoting installation efficiency over designs having separate, individual components for heater and occupant sensor systems.

Another advantage obtained from an embodiment of a form of the present invention is providing a versatile installation having an antenna that can be used for various functions in systems interacting with vehicle occupants.

Still another advantage obtained from an embodiment of the present invention in a form thereof is providing a combination seat heater and occupant sensor antenna for a capacitor system type occupant sensor in which interference with occupant sensor performance from operation of the seat heater is reduced effectively.

A further advantage of the invention is providing a method for making a combination seat heater and occupant sensor antenna that promotes efficiency and reliability

Other features and advantages of the invention will become apparent to those skilled in the art upon review of the following detailed description, claims and drawings in which like numerals are used to designate like features.

### BRIEF DESCRIPTION OF THE DRAWINGS

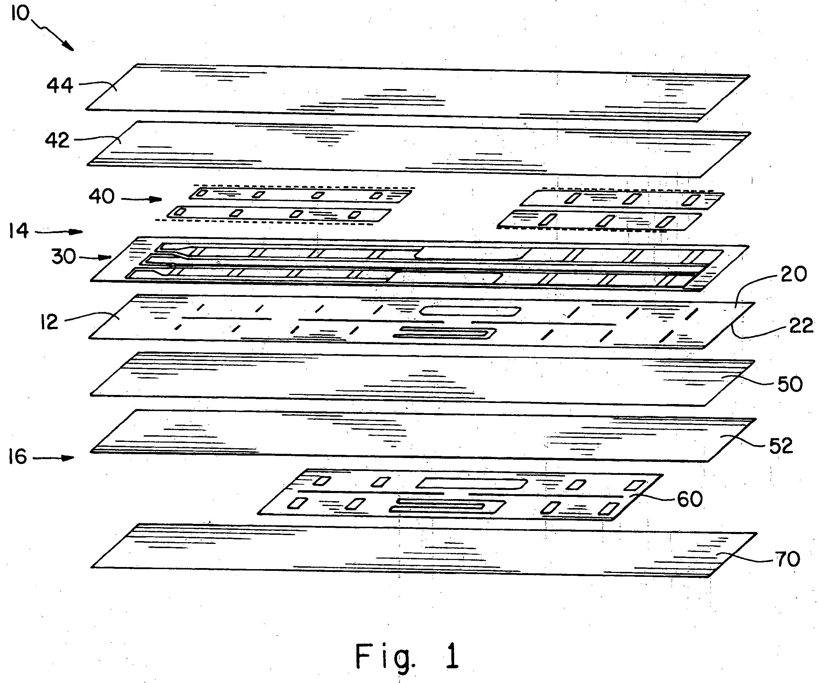

Fig. 1 is an exploded, schematic view of a combination seat heater and occupant sensor antenna in accordance with the present invention;

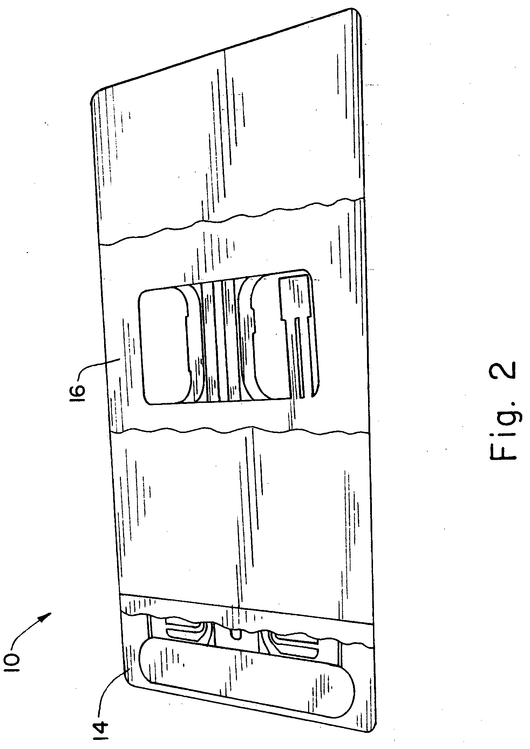

Fig. 2 is a perspective view, partially cutaway, of a combination seat heater and occupant sensor antenna in accordance with the present invention;

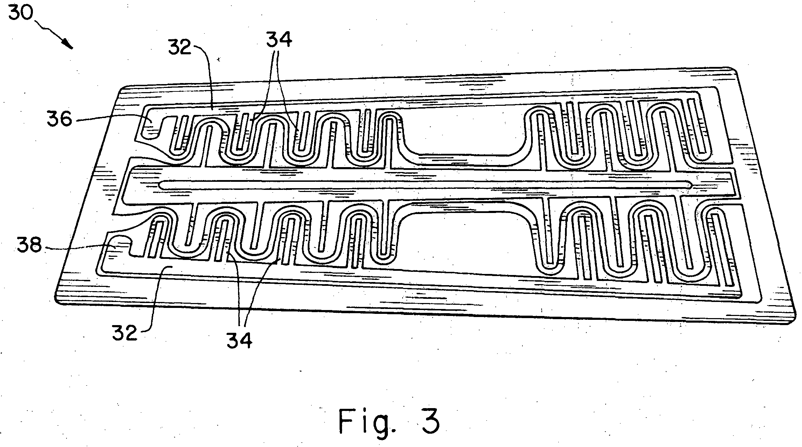

Fig. 3 is a perspective view of a seat heater in a combination seat heater and occupant sensor antenna of the present invention; and

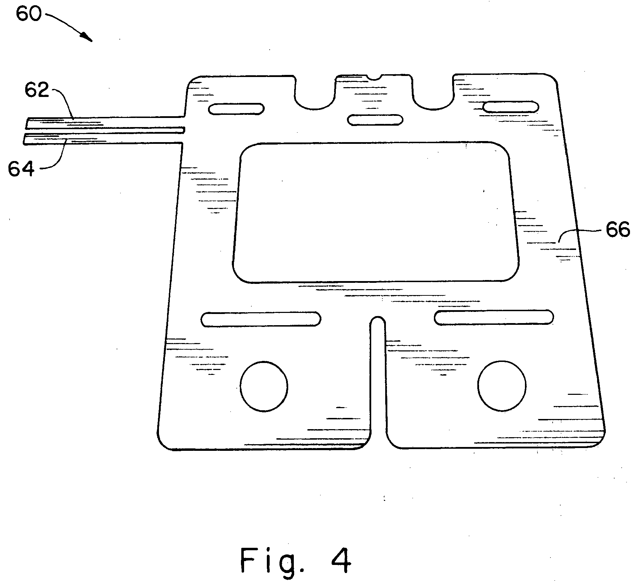

Fig. 4 is a perspective view of an occupant sensor antenna in a combination seat heater and occupant sensor antenna of the present invention.

Before the embodiments of the invention are explained in detail, it is to be understood that the invention is not limited in its application to the details of construction and the arrangements of the components set forth in the following description or illustrated in the drawings. The invention is capable of other embodiments and of being practiced or being carried out in various ways. Also, it is understood that the phraseology and terminology used herein are for the purpose of description and should not be regarded as limiting.

### DETAILED DESCRIPTION OF THE PREFERRED EMBODIMENT

Referring now more particularly to the drawings, numeral 10 designates a combination seat heater and occupant sensor antenna in accordance with the present invention. Combination seat heater and occupant sensor antenna 10 includes a substrate 12 having a seat heater assembly 14 applied on a first side thereof and an occupant sensor antenna assembly 16 applied on an opposite, second side thereof, the antenna being for a capacitance occupant sensor system. Each seat heater assembly 14 and antenna assembly 16 can be applied on substrate 12 by polymer thick film screen printing or other suitable application process, such as laminating processes.

Substrate 12 is a polymer sheet of insulative material such as, for example, polyester such as Mylar®. Substrate 12 is strong, yet flexible and has opposed surfaces 20, 22 on which heater assembly 14 and occupant sensor system antenna assembly 16 are applied. Substrate 12 is provided of suitable size and shape to be installed in and provide support to heater assembly 14 for heating the desired area of an automobile seat.

In a preferred embodiment thereof, heater assembly 14 is a self-regulating heater providing less heat and drawing less current as the temperature thereof increases, and providing more heat and drawing more current at lower temperatures. Heater assembly 14 includes a conductive layer 30 of screen printed silver or the like forming a number of conductive busses 32, conductive traces 34 and electrical connection terminals 36, 38 for supplying operating current to the heater. A resistive layer 40 of carbon or the like is applied on conductive layer 30 to provide consistent heat distribution across the surface of heater assembly 14. Resistive layer 40 may include a positive temperature coefficient material to provide increasing resistance as temperatures increase, thereby providing a self-regulating heater. Alternatively, a resistive layer of fixed resistance connected to an electronic controller to regulate the heat level also can be used. Resistive layer 40 may comprise a single segment of resistive material or may comprise a plurality of discrete segments applied to selected areas of conductive layer 30.

The manner of making and structure for a suitable heater assembly 14, including the structures of conductive layer 30 and resistive layer 40 thereof are well-known to those skilled in the art, and may take various forms, shapes and configurations beyond that specific embodiment shown for exemplary purposes in the drawings. For example, various cutouts and voids can be created both to conform to the seat in the desired areas of heating as well as to provide adequate flexibility and resiliency in the final structure.

The heater side of combination seat heater and occupant sensor antenna 10 can be completed with an adhesive layer 42 on top of heater assembly 14 and a fabric layer 44 adhered to adhesive layer 42. Adhesive layer 42 can be a contact or pressure sensitive adhesive or other suitable adherent between heater assembly 14 and fabric layer 44. Fabric layer 44 may be, for example, a low stretch polyester or other suitable fabric for covering and protecting seat heater assembly 14.

In the exemplary embodiment shown, occupant sensor antenna assembly 16 includes multiple layers applied to substrate 12 on the opposite side from seat heater assembly 14. A first layer adjacent substrate 12 is a ground plane conductor layer 50 applied to substrate 12, and may comprise a polymer thick film screen printed layer, a solid layer of silver, a metalized foil laminate or other suitable electric ground layer. Alternatively, a metalized Mylar® sheet, or a metal sheet can be used for ground plane conductor layer 50 applied to substrate 12 by a metalized adhesive or other suitable laminating process instead of screen printing.

An electrical isolation layer 52 is applied on ground plane conductor layer 50. Isolation layer 52 is a printed dielectric that may be applied by the aforementioned polymer thick film screen printing techniques. Other materials applied via other processes, such as laminating, also can be used. Dielectric isolation layer 52 provides electrical isolation between ground plane 50 and a conductive antenna layer 60. Dielectric isolation layer 52 prevents shorting between ground plane 50 and antenna layer 60. Accordingly, dielectric isolation layer 52 should have suitable thickness to provide sufficient strength and flexibility without breaking.

Antenna layer 60 is part of a capacitor system occupant sensor and comprises a conductive layer applied to dielectric isolation layer 52. For example, antenna layer 60 can be formed from silver printed in a desired configuration, and can include circuitry connections 62, 64 connected to an antenna body or plate 66. The size and shape of plate 66 can vary from one application and use of the present invention to another.

Ground plane conductor layer 50 and dielectric isolation layer 52 can be provided of similar size, shape and configuration to antenna layer 60. Alternatively, ground plane conductor layer 50 and dielectric isolation layer 52 can be provided of some size larger than antenna layer 60 and may be applied to substantially the entire dimension of second surface 22 of substrate 12. Other types of barrier and/or isolation layers can be provided between seat heater assembly 14 and occupant sensor antenna 60 to minimize potential interference in the function of the antenna caused by operation of the seat heater. For example, the thickness and composition of substrate 12 can be selected to reduce potential interference in cooperation with or in place of discrete ground plane and dielectric isolation layers interposed between the substrate and antenna.

The antenna assembly side of combination seat heater and occupant sensor antenna 10 may further include an adhesive layer 70 by which combination seat heater and occupant sensor antenna 10 can be adhered to a foam pad or other seat structure in which combination seat heater and occupant sensor antenna 10 will be used. Other external sealing and/or protective layers can be provided on either side or both sides of combination seat heater and occupant sensor antenna 10.

Those skilled in the art will understand that heaters, antennas and other conductive layers described herein may include electrical conductors that are made from a conductive metal such as copper, silver, gold, aluminum, carbon, or graphitic materials. It is further known that the conductive material used as the electrical conductors may be made of very small flakes of material in a polymer matrix. If this material is caused to be over-stretched or subject to repeated stretching, the conductive layer may crack, thereby resulting in undesirable arcing. To help alleviate potential cracking, apertures may be provided in and through the various layers described above, including substrate 12. The apertures may include holes, rectangular cutouts or irregular cutouts as necessary to promote desired bending at desired locations. The apertures may extend between multiple layers in the same size, shape and configuration; or the apertures may vary in size, shape and configuration from one layer to another layer.

The claims define the scope of the present invention. The embodiments described herein explain the best modes known for practicing the invention and will enable others skilled in the art to utilize the invention. The claims are to be construed to include alternative embodiments to the extent permitted by the prior art.

Various features of the invention are set forth in the following claims.

## Claims

1. A combination seat heater and occupant sensor antenna, comprising:
- an electrically insulative substrate (12) having opposed first and second sides (20, 22);
- a seat heater assembly (14) applied to said first side (20) of said substate (12);
- a capacitor system occupant sensor antenna (16) applied to said second side (22) of said substrate (12);
**characterized by**
an interference reducing structure (50) interposed between said seat heater assembly (14) and said antenna (16) to minimize potential interference in the function of said antenna (16) caused by operation of said seat heater assembly (14), the interference reducing structure (50)
including a ground plane layer (50) interposed between said heater assembly (14) and said antenna (16), and that said heater assembly (14) is screen printed to said first side (20) of said substrate (12).

2. The combination seat heater and occupant sensor antenna of claim 1, said ground plane layer (50) comprising a screen printed layer of conductive material, or said ground plane layer comprising a metalized foil laminated to said substrate (12).

3. The combination seat heater and occupant sensor antenna of claim 1, including an electrical isolation layer (52) interposed between said seat heater assembly (14) and said antenna (16).

4. The combination seat heater and occupant sensor antenna of claim 3, said electrical isolation layer (52) comprising a printed dielectric layer.

5. The combination seat heater and occupant sensor antenna of claim 3, said ground plane layer (50) comprising a printed conductor applied to said substrate (12); and said isolation layer (52) comprising a printed dielectric applied to said ground plane layer (50).

6. The combination seat heater and occupant sensor antenna of claim 1, said seat heater assembly (14) including a printed conductive layer and a printed resistive layer applied to said substrate (12).

7. The combination seat heater and occupant sensor antenna of claim 1, said seat heater assembly (14) and said antenna (16) comprising polymer thick film printed layers applied on opposite sides (20, 22) of said substrate (12).

8. The combination seat heater and occupant sensor antenna of claim 7, including a polymer thick film printed ground plane layer (50) between said substrate (12) and said antenna (16).

9. The combination seat heater and occupant sensor antenna of claim 8, including a polymer thick film printed dielectric layer (52) between said substrate (12) and said antenna (16).

10. The combination seat heater and occupant sensor antenna of claim 9, including a polymer thick film printed ground plane layer (50) between said substrate (12) and said polymer thick film printed dielectric layer (52).

11. The combination seat heater and occupant sensor antenna of claim 7, including a polymer thick film printed ground plane layer (50) applied to said other of said first and second sides (20, 22) of said substrate (12); a polymer thick film printed dielectric layer (52) applied to said ground plane layer; and said antenna (16) applied to said printed dielectric layer.

12. A method for making a combination seat heater and occupant sensor antenna, said method comprising steps of:
providing an electrically insulative substrate (12) having opposed first and second sides (20, 22);
printing a seat heater assembly (14) on one of the first and second sides (20, 22) of the substrate (12); and
printing a capacitor system occupant sensor antenna assembly (16) on the other of the first and second sides of the substrate;
printing an interference reducing structure (50) between said seat heater assembly (14) and said antenna (16) to minimize potential interference in the function of said antenna (16) caused by operation of said seat heater assembly (14), said step of printing a capacitor system occupant sensor antenna assembly (16) including printing an antenna (60) and printing at least one of a ground plane conductor layer (50).

13. The method of claim 12, including printing a ground plane conductor layer (50) on the other of the first and second sides (20, 22); printing a dielectric layer (52) on the ground plane layer (50) and printing the antenna (60) on the dielectric layer (52).

## Patentansprüche

1. Kombinierte Sitzheizung und Insassensensorantenne, umfassend:
- ein elektrisch isolierendes Substrat (12) mit einer gegenüberliegenden ersten und zweiten Seite (20, 22);
- eine auf die erste Seite (20) des Substrats (12) aufgebrachte Sitzheizungsbaugruppe (14);
- eine auf die zweite Seite (22) des Substrats (12) aufgebrachte Kondensatorsystem-Insassensensorantenne (16);
**gekennzeichnet durch**
eine zwischen der Sitzheizungsbaugruppe (14) und der Antenne (16) angeordnete Störungsverminderungsstruktur (50) zur Minimierung potentieller Störung der Funktion der Antenne (16), die **durch** Betrieb der Sitzheizungsbaugruppe (14) verursacht wird, wobei die Störungsverminderungsstruktur (50) eine zwischen der Heizungsbaugruppe (14) und der Antenne (16) angeordnete Massenflächenschicht (50) umfasst und die Heizungsbaugruppe (14) auf die erste Seite (20) des Substrats (12) siebgedruckt wird.

2. Kombinierte Sitzheizung und Insassensensorantenne nach Anspruch 1, wobei die Massenflächenschicht (50) eine siebgedruckte Schicht aus leitfähigem Material umfasst oder die Massenflächenschicht eine auf das Substrat (12) laminierte metallisierte Folie umfasst.

3. Kombinierte Sitzheizung und Insassensensorantenne nach Anspruch 1, die eine zwischen der Sitzheizungsbaugruppe (14) und der Antenne (16) angeordnete elektrische Isolationsschicht (52) umfasst.

4. Kombinierte Sitzheizung und Insassensensorantenne nach Anspruch 3, wobei die elektrische Isolationsschicht (52) eine gedruckte dielektrische Schicht umfasst.

5. Kombinierte Sitzheizung und Insassensensorantenne nach Anspruch 3, wobei die Massenflächenschicht (50) einen auf das Substrat (12) aufgebrachten gedruckten Leiter umfasst; und die Isolationsschicht (52) ein auf die Massenflächenschicht (50) aufgebrachtes gedrucktes Dielektrikum umfasst.

6. Kombinierte Sitzheizung und Insassensensorantenne nach Anspruch 1, wobei die Sitzheizungsbaugruppe (14) eine gedruckte leitfähige Schicht und eine auf das Substrat (12) aufgebrachte gedruckte Widerstandsschicht umfasst.

7. Kombinierte Sitzheizung und Insassensensorantenne nach Anspruch 1, wobei die Sitzheizungsbaugruppe (14) und die Antenne (16) auf gegenüberliegenden Seiten (20, 22) des Substrats (12) aufgebrachte gedruckte Polymer-Dickfilmschichten umfassen.

8. Kombinierte Sitzheizung und Insassensensorantenne nach Anspruch 7, die eine gedruckte Polymer-Dickfilm-Massenflächenschicht (50) zwischen dem Substrat (12) und der Antenne (16) umfasst.

9. Kombinierte Sitzheizung und Insassensensorantenne nach Anspruch 8, die eine gedruckte dielektrische Polymer-Dickfilmschicht (52) zwischen dem Substrat (12) und der Antenne (16) umfasst.

10. Kombinierte Sitzheizung und Insassensensorantenne nach Anspruch 9, die eine gedruckte Polymer-Dickfilm-Massenflächenschicht (50) zwischen dem Substrat (12) und der gedruckten dielektrischen Polymer-Dickfilmschicht (52) umfasst.

11. Kombinierte Sitzheizung und Insassensensorantenne nach Anspruch 7, die eine auf die andere der ersten und zweiten Seite (20, 22) des Substrats (12) aufgebrachte gedruckte Polymer-Dickfilm-Massenflächenschicht (50); eine auf die Massenflächenschicht aufgebrachte gedruckte dielektrische Polymer-Dickfilmschicht (52); und die auf die gedruckte dielektrische Schicht aufgebrachte Antenne (16) umfasst.

12. Verfahren zur Herstellung einer kombinierten Sitzheizung und Insassensensorantenne, wobei das Verfahren die folgenden Schritte umfasst:
Bereitstellen eines elektrisch isolierenden Substrats (12) mit einer gegenüberliegenden ersten und zweiten Seite (20, 22);
Drucken einer Sitzheizungsbaugruppe (14) auf eine der ersten und zweiten Seite (20, 22) des Substrats (12); und
Drucken einer Kondensatorsystem-Insassensensor-Antennenbaugruppe (16) auf die andere der ersten und zweiten Seite des Substrats;
Drucken einer Störungsverminderungsstruktur (50) zwischen der Sitzheizungsbaugruppe (14) und der Antenne (16), um potentielle Störungen der Funktion der Antenne (16), die durch Betrieb der Sitzheizungsbaugruppe (14) verursacht wird, zu minimieren, wobei der Schritt des Druckens einer Kondensatorsystem-Insassensensor-Antennenbaugruppe (16) Drucken einer Antenne (60) und Drucken mindestens einer Massenflächen-Leiterschicht (50) umfasst.

13. Verfahren nach Anspruch 12, umfassend: Drucken einer Massenflächen-Leiterschicht (50) auf die andere der ersten und zweiten Seite (20, 22); Drucken einer dielektrischen Schicht (52) auf die Massenflächenschicht (50) und Drucken der Antenne (60) auf die dielektrische Schicht (52).

## Revendications

1. Combinaison de chauffe-siège et d'antenne de détection d'occupant, comprenant :
- un substrat électriquement isolant (12) ayant des premier et deuxième côtés opposés (20, 22) ;
- un ensemble chauffe-siège (14) appliqué audit premier côté (20) dudit substrat (12) ;
- une antenne de détection d'occupant à système capacitif (16) appliquée audit deuxième côté (22) dudit substrat (12) ;
**caractérisée par** une structure de réduction des interférences (50) intercalée entre ledit ensemble chauffe-siège (14) et ladite antenne (16) pour minimiser les interférences potentielles dans le fonctionnement de ladite antenne (16) provoquées par le fonctionnement dudit ensemble chauffe-siège (14), la structure de réduction des interférences (50) comportant une couche de plan de masse (50) intercalée entre ledit ensemble de chauffage (14) et ladite antenne (16), et en ce que ledit ensemble de chauffage (14) est sérigraphié sur ledit premier côté (20) dudit substrat (12).

2. Combinaison de chauffe-siège et d'antenne de détection d'occupant de la revendication 1, ladite couche de plan de masse (50) comprenant une couche sérigraphiée de matériau conducteur, ou ladite couche de plan de masse comprenant une feuille métallisée laminée sur ledit substrat (12).

3. Combinaison de chauffe-siège et d'antenne de détection d'occupant de la revendication 1, comportant une couche d'isolation électrique (52) intercalée entre ledit ensemble chauffe-siège (14) et ladite antenne (16).

4. Combinaison de chauffe-siège et d'antenne de détection d'occupant de la revendication 3, ladite couche d'isolation électrique (52) comprenant une couche diélectrique imprimée.

5. Combinaison de chauffe-siège et d'antenne de détection d'occupant de la revendication 3, ladite couche de plan de masse (50) comprenant un conducteur imprimé appliqué audit substrat (12) ; et ladite couche d'isolation (52) comprenant un diélectrique imprimé appliqué à ladite couche de plan de masse (50).

6. Combinaison de chauffe-siège et d'antenne de détection d'occupant de la revendication 1, ledit ensemble chauffe-siège (14) comportant une couche conductrice imprimée et une couche résistive imprimée appliquées audit substrat (12).

7. Combinaison de chauffe-siège et d'antenne de détection d'occupant de la revendication 1, ledit ensemble chauffe-siège (14) et ladite antenne (16) comprenant des couches imprimées de film polymère épais appliquées sur les côtés opposés (20, 22) dudit substrat (12).

8. Combinaison de chauffe-siège et d'antenne de détection d'occupant de la revendication 7, comportant une couche de plan de masse imprimée en film polymère épais (50) entre ledit substrat (12) et ladite antenne (16).

9. Combinaison de chauffe-siège et d'antenne de détection d'occupant de la revendication 8, comportant une couche diélectrique imprimée en film polymère épais (52) entre ledit substrat (12) et ladite antenne (16).

10. Combinaison de chauffe-siège et d'antenne de détection d'occupant de la revendication 9, comportant une couche de plan de masse imprimée en film polymère épais (50) entre ledit substrat (12) et ladite couche diélectrique imprimée en film polymère épais (52).

11. Combinaison de chauffe-siège et d'antenne de détection d'occupant de la revendication 7, comportant une couche de plan de masse imprimée en film polymère épais (50) appliquée audit autre desdits premier et deuxième côtés (20, 22) dudit substrat (12) ; une couche diélectrique imprimée en film polymère épais (52) appliquée à ladite couche de plan de masse ; et ladite antenne (16) appliquée à ladite couche diélectrique imprimée.

12. Procédé de fabrication d'une combinaison de chauffe-siège et d'antenne de détection d'occupant, ledit procédé comprenant les étapes consistant à :
se procurer un substrat électriquement isolant (12) ayant des premier et deuxième côtés opposés (20, 22) ;
imprimer un ensemble chauffe-siège (14) sur un des premier et deuxième côtés (20, 22) du substrat (12) ; et
imprimer un ensemble antenne de détection d'occupant à système capacitif (16) sur l'autre des premier et deuxième côtés du substrat ;
imprimer une structure de réduction des interférences (50) entre ledit ensemble chauffe-siège (14) et ladite antenne (16) pour minimiser les interférences potentielles dans le fonctionnement de ladite antenne (16) provoquées par le fonctionnement dudit ensemble chauffe-siège (14), ladite étape d'impression d'un ensemble antenne de détection d'occupant à système capacitif (16) comportant l'impression d'une antenne (60) et l'impression d'au moins une couche conductrice de plan de masse (50).

13. Procédé de la revendication 12, comportant l'impression d'une couche conductrice de plan de masse (50) sur l'autre des premier et deuxième côtés (20, 22) ; l'impression d'une couche diélectrique (52) sur la couche de plan de masse (50) ; et l'impression de l'antenne (60) sur la couche diélectrique (52).
